# EUROPEAN PATENT APPLICATION

(11) **EP 1 767 820 A2**
(43) Date of publication of application: **28.03.2007**
(21) Application number: 06380137.7
(22) Date of filing: 25.05.2006
(51) Int. Cl.: F16H 59/02

(54) **Fixing device for the cover of a gear shift lever of an automotive vehicle**

(30) Priority: 22.09.2005 ES 200502091 U
(71) Applicant: Seat, S.A., 08040 Barcelona (ES)
(72) Inventor: Perez Perez, Fernando Seat, S.A., 08760 Martorell (ES); Resello Roig, Nuria Seat, S.A., 08760 Martorell (ES); Martos Ortega, Antonio Seat, S.A., 08760 Martorell (ES)
(74) Representative: Carvajal y Urquijo, Isabel

(57) **Abstract**

The present invention relates to a fixing device for the cover of a gear shift lever of an automotive vehicle, which cover (3) is enveloping and has an upper opening and a lower opening that is larger than the upper opening. The device comprises a fixing frame (1) and a trim (2), which fixing frame consists of a ring-shaped body having a shape that coincides with the shape of the lower opening of the cover. The frame (1) has on its outer perimetral wall (5) a plurality of first small flanges (8) and a wing (7) projecting from the lower portion of said perimetral wall (5). Arranged on the wing (7) is a plurality of fixing elements (10) for fixing to said body (6) and the outer perimetral wall (5) has at least two larger flanges (9) arranged on the area of the frame (1) opposite to the area in which said wing (7) is arranged.

## Description

### FIELD AND OBJECT OF THE INVENTION

The invention is comprised within the automotive field, and it more specifically relates to a fixing device for the cover of a gear shift lever of an automotive vehicle that is formed by a frame for fixing the cover to the body of the central console of the vehicle and a trim, which have mutual interconnection means, the protective cover of the gear shift lever of the vehicle being located between them.

### STATE OF THE ART

In most vehicles today, the gear shift lever is usually provided with a protective cover that is joined directly to the body of the central console of the vehicle. The primary purpose of said covers is on one hand to make the transition between the gear shift lever and said central console more esthetic, and on the other to prevent dirt from being deposited there.

The cover is usually fixed directly on the body of the central console by various means, always in such a way that it can be removed for handling and recycling, such as for example various forms of mechanical-type fixing such as screws, clips, etc.

Such unions end up being deteriorated with the use of the vehicle and the cover ends up being released from the body of the central console and on occasionally said cover, which is usually made of fabrics or plastic, breaks in the areas where it is joined to the body of the central console. On other occasions, union systems having a large number of pieces are sought so as to assure firm fixing of said cover, such systems being very complex and expensive to manufacture.

Due to the foregoing, the need to provide a fixing device for the cover of the gear shift lever enabling the firm and long-lasting union of the cover to the body of the central console has been detected.

This objective is achieved by means of the invention as it is defined in claim 1, and the dependent claims define preferred embodiments of the invention.

### DESCRIPTION OF THE INVENTION

The present invention relates to a fixing device for the cover of a gear shift lever of an automotive vehicle, which cover has en enveloping shape having an upper opening joined to the lower part of the knob of the gear shift lever and a lower opening, larger than the upper opening, intended for being joined to the vehicle.

The device comprises a fixing frame and a trim and is characterized in that the fixing frame consists of a ring-shaped body, having a shape that coincides with the shape of the perimeter of the lower opening of the cover, said fixing frame having on its outer perimetral wall a plurality of first small flanges and a wing projecting from the lower portion of said perimetral wall, partially covering it, defining a lower stepping of the frame for its seating on the body of the central console, on which wing a plurality of fixing elements for the fixing to said body is arranged, said perimetral wall further having at least two larger flanges arranged in the area of the frame opposite the area in which said wing is arranged.

For its part, the trim has the same shape as the frame, its dimensions being such that it can be externally assembled on the frame, there remaining a space between them that is equivalent to the thickness of the cover and having a lower wall covering its entire perimeter from which flaps project, the position of which coincides with the position of the first small flanges of the frame, each flap having a slot and said first small flanges being fitted into said slots, the cover remaining between the fixing frame and the trim.

The cover of the gear shift lever is thus joined to the body of the central console of the vehicle by means of the fixing frame, which has joining means for joining to said body, and the device is completed with a trim, the primary purpose of which is on one hand to assure the union between the cover and the frame and on the other to act as a covering element covering the union between the frame and the body of the central console, thus preventing dirt from being retained in said joint and making the device a highly esthetic element.

The fixing elements for fixing the frame to the body of the central console consist of openings made on the wing from the lower edge of which partitions extend, which are prolonged beyond the width of the wing towards the opening of the frame, said partitions having a determined upward inclination towards the inside of the frame, and projecting from them through a bend are flaps projecting towards the outside of the frame and running in the upward direction, separating from said partition.

In this manner and as a result of the described configuration of the fixing elements for fixing the frame, the integral union between the body of the central console and the frame is achieved by means of applying a brief pressure on the frame on the cavity provided in the body of the central console for receiving the frame. In fact, given that the partition is joined to the opening made on the wing of the frame only on its lower part, such arrangement allows the elastic movement of the partition with respect to said wing in the horizontal direction, which together with the slight inclination towards the inside of said partition and the flaps projecting therefrom make the flange butt against the body when the frame is introduced in said body and, as a result of its slight inclination towards the outside, pushes the partition, which will move towards the inside of the frame allowing the easy introduction of the frame into the body of the central console and in the same manner preventing its easy extraction once the frame has been introduced into the body as a result of said flaps.

The larger flanges of the frame are perpendicular to the outer perimetral wall thereof and have a beveling on their inner side intended for facilitating their entry into the corresponding cavities of the body of the central console of the vehicle.

The larger flanges of the frame are usually introduced first in the cavities arranged for such purpose in the body of the main console and the fixing elements for fixing the frame will then be fitted in by applying simple pressure thereon.

Second small flanges are arranged on the outer perimetral wall of the frame separated from the first flanges by a spacing such that located between both first and second flanges is the area of the flaps of the trim which do not have an opening.

The flap will thus be located between the first and second flanges and therefore there will not be any relative movement between the frame and the trim on the horizontal plane.

The first small flanges have on their upper side for receiving the corresponding flap of the trim, beveled recesses for the fitting between said flap and said first flanges. Such configuration is in line with facilitating the fitting of the trim in the frame.

### DESCRIPTION OF THE DRAWINGS

A series of drawings aiding to better understand the invention and which are expressly related to several embodiments of said invention, presented as illustrative and non-limiting examples thereof, will be very briefly described below.

Figure 1 shows a front perspective view of the frame forming the fixing device for fixing the cover of a gear shift lever of an automotive vehicle object of the present invention.

Figure 2 shows a rear perspective view of the frame forming the fixing device for fixing the cover of a gear shift lever of an automotive vehicle object of the present invention.

Figure 3 shows a perspective view of the trim forming the fixing device for the cover of a gear shift lever of an automotive vehicle object of the present invention.

Figure 4 shows a sectional view of the frame - trim - cover assembly according to a longitudinal plane traversing the larger dimension of the frame, splitting it into two equal parts, in which it can be seen how said elements are located with respect to the body of the central console of the vehicle.

### DESCRIPTION OF AN EMBODIMENT OF THE INVENTION

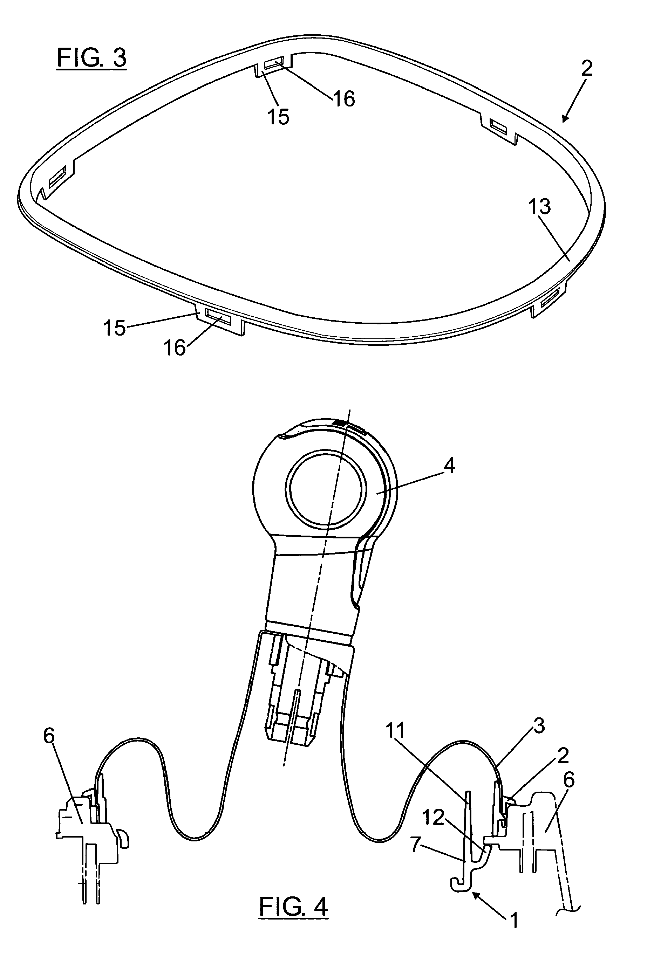

The fixing device for the cover of a gear shift lever of an automotive vehicle object of the present invention, as can be seen in Figure 4, is formed by a frame 1 and a trim 2, between which the cover 3 of a gear shift lever 4 are located.

The cover 3 has an enveloping shape, having an upper opening joined to the lower part of the knob of the gear shift lever, and a lower opening that is larger than the upper opening, intended for being joined to the body 6 of the central console of the vehicle through the frame 1.

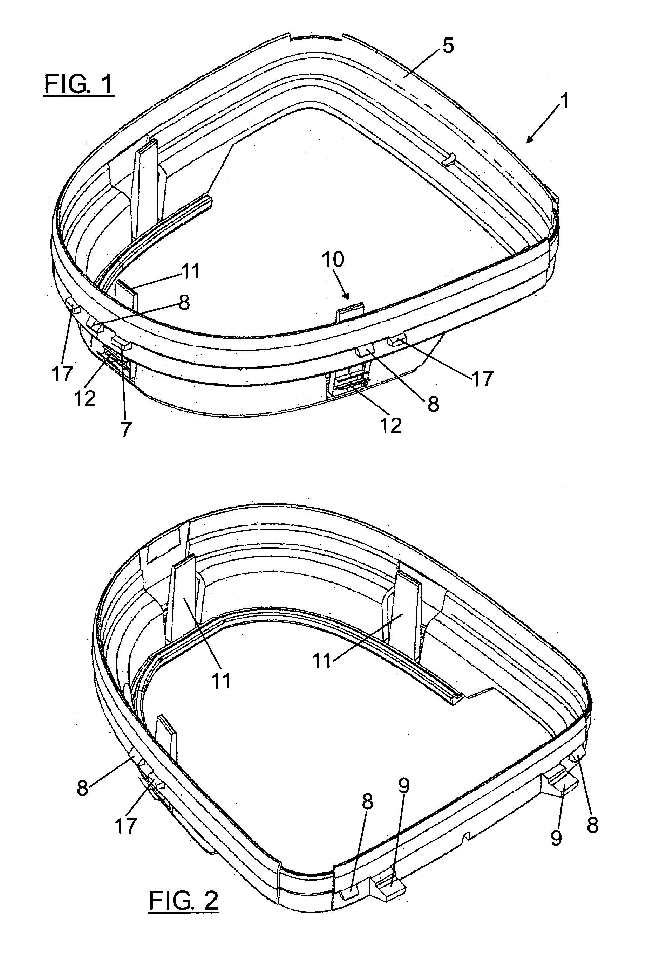

Given that said figure does not show the shape of the frame 1 or the trim 2, they have been represented in perspective separately in Figures 1, 2 and 3. Thus, as can be seen in Figure 1, said frame consists of a ring-shaped body, having an approximate trapezoidal shape in this embodiment of the invention, the sides of the trapezoid being curved with a convex curvature and the vertexes of the trapezium being rounded. The section of said frame is such that said frame has an outer perimetral wall 5 acting as a mouth with the described shape on which the lower opening of the cover of the gear shift lever is located, after which there is defined an intermediate stepping towards the inside of the frame that is prolonged by a lower wing 7 partially covering the perimeter of the frame 1. Said stepping is designed so that the frame 1 sits on the corresponding opening made in the body 6 of the central console of the vehicle.

Arranged on the outer perimetral wall 5 is a plurality of small flanges 8. Specifically for this embodiment of the invention, the portion of said perimetral wall corresponding to the front of the frame 1 has one of said first flanges located close to one another, separated a certain distance, in so far as the sides, only one of said flanges is arranged on each one of the sides, whereas two flanges are arranged on the rear part of the frame close to the rounded vertexes of the trapezium defined by the frame 1.

Two respective larger flanges 9 are arranged right beside the former (the first flanges), the primary purpose of which will be to act as first anchoring points of the frame 1 with respect to the body 6 of the central console.

For its part, a plurality of fixing elements 10 for fixing the frame 1 to the body 6 of the central console is arranged on the lower wing 7. More specifically, said fixing elements 10 consist of openings made on the lower wing 7 from the lower edge of which partitions 11 extend beyond the width of the lower wing 7 towards the mouth of the frame, said partitions 11 having a determined upward inclination towards the inside of the frame, and projecting from them through a bend are flaps 12 projecting towards the outside of the frame and running in the upward direction, separating from said partition 11.

The device is completed with a trim 2, consisting of a ring-shaped body 13, having a shape that is equal to that of the frame, its dimensions being such that it is externally assembled on the outer perimetral wall 5 of the frame 1. The trim 2 has a lower perimetral partition 14 perpendicular to the ring-shaped body 13, there being a space between said partition 14 and the wall 5 of the frame 1 such that it allows the passage of the cover 3 between them.

Said cover can be joined to said wall 5 of the frame 1 by means of simple gluing or clamping, the partition 14 of the trim 2 being located in parallel to said wall when it is assembled on the frame 1.

The partition 14 has a plurality of flaps 15 coinciding in position and number with the first flanges 8, which have slots 16, the first ribs being introduced in said slots when the trim 2 is assembled on the frame 1. The first small flanges 8 have beveled recesses on their upper side for the purpose of facilitating the fitting between the trim 2 and frame 1.

There are second, also small, flanges 17 near the first flanges 8, separated from the first ones by a determined distance of a magnitude such that located between both first and second flanges is the area of the flaps 15 of the trim 2 which does not have a slot 16, the flap being locked therein so as to safely prevent the possible relative movement between the trim 2 and the frame 1.

With the described configuration, the frame 1 shall be introduced in the body 6 of the central console of the vehicle, being retained therein as a result of, on one hand, the partitions 11 and flaps 12 of the fixing elements 10, and on the other hand the larger flanges 9 introduced in openings (not shown) made for that purpose on the frame receiving edge of the body 6 of the central console.

## Claims

1. A fixing device for the cover of a gear shift lever of an automotive vehicle, which cover (3) has an enveloping shape, having an upper opening joined to the lower part of the knob of the gear shift lever (4) and a lower opening that is larger than the upper opening intended for being joined to the central console of the vehicle, comprising a fixing frame (1) and a trim (2), **characterized in that** the fixing frame consists of a ring-shaped body, having a shape that coincides with the shape of the perimeter of the lower opening of the cover, said fixing frame (1) having on its outer perimetral wall (5) a plurality of first small flanges (8) and a wing (7) projecting from the lower part of said perimetral wall (5) and partially covering it, defining a lower stepping of the frame (1) for its seating on the body (6) of the central console, on which wing (7) there is arranged a plurality of fixing elements (10) for fixing to said body (6), said outer perimetral wall (5) further having at least two larger flanges (9) arranged in the area of the frame (1) opposite to the area in which said wing (7) is arranged.

2. A fixing device for the cover of a gear shift lever of an automotive vehicle, **characterized in that** the trim (2) has a shape that is equal to that of the frame (1), its dimensions being such that it can be externally assembled on the frame (1), there being a space between them that is equivalent to the thickness of the cover (3) and having a lower partition (14) covering its entire perimeter from which flaps (15) project, the position of which flaps coincides with the position of the first small flanges (8) of the frame (1), each flap (15) having a slot (16) and said first small flanges (8) being fitted into said slots (16), the cover (3) remaining located between the fixing frame (1) and the trim (2).

3. A fixing device for the cover of a gear shift lever of an automotive vehicle according to any one of the previous claims, **characterized in that** the fixing elements (10) for fixing the frame (1) to the body (6) of the central console consist of openings made on the lower wing (7) from the lower edge of which partitions (11) extend, prolonged beyond the width of the wing (7) towards the mouth of the frame (1), said partitions (11) having a determined upward inclination towards the inside of the frame (1) and from which flaps (12) project through a bend towards the outside of the frame (1) and running in the upward direction, separating from said partition (11).

4. A fixing device for the cover of a gear shift lever of an automotive vehicle according to any of the previous claims, **characterized in that** the larger flanges (9) of the frame are perpendicular to the outer perimetral wall (5) thereof and have a beveling on their inner side.

5. A fixing device for the cover of a gear shift lever of an automotive vehicle according to any of the previous claims, **characterized in that** arranged on the outer perimetral wall (5) of the frame (1) there are second small flanges (17) separated form the first flanges (8) by a distance such that located between both first and second flanges is the area of the flaps (15) for the trim (2) that are not provided with a slot (16).

6. A fixing device for the cover of a gear shift lever of an automotive vehicle according to any of the previous claims, **characterized in that** the first small flanges (8) have on their upper side for receiving the corresponding flap (15) of the trim (2) beveled recesses for the fitting between said flap and said first flanges.
